# EUROPEAN PATENT SPECIFICATION

(11) **EP 4 524 214 B1**
(45) Date of publication and mention of the grant of the patent: **04.11.2026**
(21) Application number: 23197060.9
(22) Date of filing: 13.09.2023
(51) Int. Cl.: C09J 123/20, B32B 27/32, C08L 23/22

(54) **PRESSURE SENSITIVE ADHESIVE COMPOSITION**
DRUCKEMPFINDLICHE KLEBSTOFFZUSAMMENSETZUNG
COMPOSITION ADHÉSIVE SENSIBLE À LA PRESSION

(43) Date of publication of application: 19.03.2025
(73) Proprietor: Henkel AG & Co. KGaA, 40589 Düsseldorf (DE)
(72) Inventor: KASPER, Dirk, 40597 Düsseldorf (DE); LANOVA, Barbora, 40589 Düsseldorf (DE); BRAMMERTZ, Benjamin, 40699 Erkrath (DE)

(56) References cited:
- EP-A1- 3 260 512
- EP-A1- 3 964 362
- US-A- 4 833 192
- US-A- 5 455 111

## Description

The present invention refers to a pressure sensitive adhesive composition, the use of said composition in re-closable packaging units, an article comprising the pressure sensitive adhesive composition and a method for manufacturing said article.

Pressure sensitive adhesives are a type of non-reactive adhesives which form a bond when pressure is applied to bond the adhesive with a surface. They are commonly employed in pressure-sensitive tapes, labels, glue dots, stickers, sticky note pads, automobile trimmings and a variety of other products.

EP 2 630 211 describes a multilayer easy peel re-closable film structure for heat seal application wherein at least an inner layer is made of or substantially consists of a pressure-sensitive adhesive comprising a butene-1 (co)polymer having a content of butene-1 derived units of 80 wt.-% or more, a flexural modulus (MEF) of 80 MPa or less, and a melting temperature DSC (Tml) equal to or lower than 50 °C and at least one tackifier.

EP 3 323 866 refers to a pressure sensitive adhesive composition comprising i) at least one butene-1 (co)polymer, ii) at least one liquid tackifier, iii) at least one solid tackifier and iv) at least one styrene copolymer, with the butene-1 (co)polymer having a butene-1 content of 85 to 100 % by mol, based on the butene-1 (co)polymer and the styrene copolymer being selected from Styrene-Butadiene-Styrene (SBS), Styrene-Ethylene-Propylene (SEP), Styrene-Isoprene-Styrene (SIS), Styrene-Ethylene/Butylene-Styrene (SEBS) and Styrene-Isoprene/Butadiene-Styrene (SIBS) copolymers.

EP 3 260 512 discloses pressure sensitive adhesive compositions comprising i) at least one butene-1 (co)polymer, ii) at least one liquid tackifier, iii) at least one solid tackifier and iv) at least one styrene copolymer, with the butene-1 (co)polymer having a butene-1 content of 85 to 100 % by mol, based on the butene-1 (co)polymer, and with the at least one liquid tackifier being selected from liquid hydrocarbon resins and hydrogenated hydrocarbon resins, liquid polystyrenes, liquid rosin esters, liquid polyterpenes, liquid resins from polymerized and hydrogenated C9 hydrocarbons streams, liquid resins from polymerized and hydrogenated dicyclopentadiene species; liquid resins from polymerized and hydrogenated pure monomer selected from styrene, vinyl toluene or alpha-methyl styrene.

Although a large number of pressure sensitive adhesive is available for a variety of applications, most of the common compositions comprise styrene block copolymers or related compounds. However, styrene-based compounds are not easily recycled, therefore there is still a need for pressure sensitive adhesives which offer improved re-closable characteristics, in particular for re-closable food packaging, and allow easy and effective recycling of the packaging. This need is address by the present invention which provides a pressure sensitive adhesive composition especially useful in re-closable food packaging.

In this regard, a first object of the present invention is a pressure sensitive adhesive composition comprising , based on the total weight of the composition:
from 30 to 80 wt.% of a) at least one butene-1 (co)polymer,
from 0.5 to 50 wt.% of b) at least one solid tackifier; and,
from 0.5 to 30 wt.% of c) at least one polyisobutylene polymer, wherein the at least one polyisobutylene polymer has a weight average molecular weight (Mw) of 40 000 to 1 110 000 g/mol, as measured via GPC using polystyrene standards.

It was surprisingly found that the pressure sensitive adhesive composition of the present invention shows excellent re-closable characteristics while at the same time possessing a high transparency and low melt flow index (MFI) which is especially important for good processability, in particular by extrusion or melt blowing, typical techniques of manufacturing re-closable food packaging. In addition, the pressure sensitive adhesive of the present invention exhibits only a slight odor which makes it especially suitable for food packaging.

The butene-1 (co)polymer contained in the pressure sensitive adhesive composition according to the present invention is typically exhibiting a behavior ranging from elastomeric to plastomeric and can be a homopolymer or a copolymer of butene- 1 with one or more α-olefins different from butene-1. Preferred are α-olefins, which may be present as comonomers in the butene-1 (co)polymer, are those of formula H₂CH=CHR, where R is H or methyl or a C3-6 linear or branched alkyl, in particular ethylene, propylene, pentene-1, hexene-1, 4-methylpentene and octene-1. Particularly preferred as comonomer is ethylene.

In a preferred embodiment, the butene-1 (co)polymer of the pressure sensitive adhesive composition of the present invention has a content of butene-1 derived units of 80 wt.-% or more, preferably 90 to 99 wt.-%, based on the weight of the (co)polymer.

Preferably, the butene-1 (co)polymer has a low crystallinity of less than 40%, preferably less than 30%, even more preferably lower than 20%, measured via X-ray.

Preferably, the butene-1 (co)polymer has a density of 0.899 g/cm³ or less, more preferably of 0.895 g/cm³ or less, even more preferably lower than 0.875 g/cm³, determined according to ISO 1183.

Preferably, the butene-1 (co)polymer has hardness shore A lower than 90, more preferably lower than 70, determined according to ISO 868.

Preferably, the butene-1 (co)polymer has a content of xylene insoluble fraction at 0 °C from 1 to 60 wt.-%, preferably from 1 to 20 wt.-%, more preferably less than 15 wt.-%.

Preferably, the butene-1 (co)polymer has an intrinsic viscosity [η] measured in tetralin at 135 °C from 1 to 4 dL/g, preferably from 1.5 to 2.5 dL/g.

Preferably, the butene-1 (co)polymer has a distribution of molecular weights (Mw/Mn) measured by GPC lower than 4.

In an embodiment, the at least one butene-1 (co)polymer is comprised in the pressure sensitive adhesive composition in an amount of 30 to 80 wt.-%, preferably 35 to 75 wt.-%, based on the total weight of the composition, respectively.

The pressure sensitive adhesive comprises at least one solid tackifier. The presence of solid tackifiers was found to increase adhesive strength to different substrates, especially to low-energy foils like polyethylene or oriented polypropylene films.

In a preferred embodiment, the at least one solid tackifier is selected from the group consisting of hydrocarbon resins, preferably hydrogenated hydrocarbon resins; aromatic modified resins, terpen phenol resins, piperylene, 2-methyl-2-butene copolymers, cyclopentadiene resins or mixtures thereof and/or the at least one solid tackifier has a softening point (measured according to ASTM E28-99) of 80 to 150 °C; more preferably 85 to 130 °C, most preferably 90 to 115 °C.

The at least one solid tackifier employed according to the present invention can be selected from aliphatic hydrocarbon resins, aromatic modified aliphatic hydrocarbon resins, hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentadiene resins, hydrogenated aliphatic resin, hydrogenated aliphatic aromatic resins, hydrogenated terpenes and modified terpenes, hydrogenated rosin acids, and hydrogenated rosin esters. In some embodiments the tackifier is hydrogenated.

The term "hydrogenated" as used herein refers hydrocarbon resins which are at least 95%, preferably at least 98%, more preferably at least 99%, and in particular fully hydrogenated.

Preferred hydrocarbon resins for use as tackifiers or modifiers include:
Resins such as C5/C6 terpene resins, styrene terpenes, alpha-methyl styrene terpene resins, C9 terpene resins, aromatic modified C5/C6, aromatic modified cyclic resins, aromatic modified dicyclopentadiene based resins or mixtures thereof. Typically these resins are obtained from the cationic polymerization of compositions containing one or more of the following monomers: C5 diolefins, such as 1,3-pentadiene, isoprene; C5 olefins, such as 2-methylbutenes, cyclopentene; C6 olefins, such as hexene; C9 vinylaromatics, such as styrene, alpha methyl styrene, vinyltoluene, indene, methyl indene; cyclics, such as dicyclopentadiene, methyldicyclopentadiene; and/or terpenes, such as limonene, carene.

Another class of preferred solid tackifiers are resins obtained by the thermal polymerization of dicyclopentadiene and/or the thermal polymerization of dimers or oligomers of cyclopentadiene and/or methylcyclopentadiene, optionally with vinylaromatics such as styrene, alpha-methyl styrene, vinyl toluene, indene or methyl indene. The resins obtained after polymerization and separation of unreacted materials are preferably hydrogenated.

In an embodiment, the pressure sensitive adhesive composition comprises the at least one solid tackifier in an amount of 0.5 to 50 wt.-%, preferably 5 to 45 wt.-%, more preferably 10 to 40 wt.-%, based on the total weight of the composition, respectively.

The pressure sensitive adhesive may comprise a mixture of solid tackifiers. In a preferred embodiment, the pressure sensitive adhesive comprises at least two solid tackifiers. In an especially preferred embodiment, the first solid tackifier comprises a hydrogenated hydrocarbon C9 resin and the second solid tackifier comprises a C5 resin. The first and second solid tackifiers are preferably present in the pressure sensitive adhesive composition in a weight ratio of 1:1.

The pressure sensitive adhesive composition of the present invention comprises at least one polyisobutylene. In an embodiment, the composition comprises the at least one polyisobutylene polymer in an amount of 0.5 to 30 wt.-%, preferably 0.5 to 15 wt.-%, more preferably 1 to 15 wt.-%, especially 0.5 to 7.5 wt.-%, based on the total weight of the composition, respectively.

In an embodiment, the at least one polyisobutylene has a molecular weight Mw of 40 000 to 1 110 000 g/mol, measured via GPC using polystyrene standards, and/or a Mw/Mn of lower than 5, measured via GPC using polystyrene standards. In an especially preferred embodiment, the polyisobutylene may be comprised in the pressure sensitive adhesive composition in form of medium-molecular polyisobutylene. The polyisobutylene preferably has a molecular weight Mw of 10^4 to 5*10^6 g/mol more preferable 5*10^4 to 10^6 g/mol even more preferable 10^5 to 10^6 g/mol.

Within the course of the present invention, it was surprisingly found that a pressure sensitive adhesive composition could be provided which shows excellent re-closable characteristics without the need of styrene block copolymers which are commonly employed. Therefore, in a preferred embodiment, the pressure sensitive adhesive composition is free of styrene block copolymers. Preferably, the content of styrene block copolymer in the composition is less than 1 wt.-%, more preferably less than 0.5 wt.-%, in particular less than 0.1 wt.-%, based on the total weight of the composition respectively.

The pressure sensitive adhesive composition according to the present invention is in particular designed for being processed via extrusion or melt blowing. In this regard, a low melt flow index was found to be of particular advantage. Whereas common pressure sensitive adhesive compositions show a melt flow index (MFI) of about 20 to 30 g/10 min, the pressure sensitive adhesive composition according to the invention surprisingly showed a reduced melt flow index. Thus, in a preferred embodiment, the pressure sensitive adhesive composition has a melt flow index (MFI) of 2 to 30 g/10 min, preferably 2 to 25 g/10 min, more preferably 2 to 20 g/10 min, in particular 2 to 18 g/10 min, measured according to DIN EN ISO 1133-1:2012-03; 2.16 kg, 190 °C / 10 min.

The pressure sensitive adhesive composition of the present invention may comprise further components. In a preferred embodiment, the pressure sensitive adhesive composition comprises at least one further polymer different from a) and c). The further polymer is preferably an olefin (co)polymer, such as an alpha-olefin (co)polymer; more preferably a metallocene catalyzed alpha-olefin (co)polymers, even more preferably an ethylene or octene alpha-olefin (co)polymer; most preferably an octene ethylene alpha-olefin copolymer.

The pressure sensitive adhesive composition according to the invention is especially suitable for use in food packaging, in particular re-closable food packaging. Therefore, a further object of the present invention is the use of a pressure sensitive adhesive composition according to the invention as closing means for re-closable packaging unit, preferably a packaging unit for foods, drugs, hygienic tissues, cleaning tissues or cosmetic tissues and/or for packaging units to be heated in a microwave or oven.

In another aspect, the present invention refers to an article comprising a pressure sensitive adhesive composition according to the invention as an adhesive layer between two substrates.

The substrates preferably contain or are made of a material selected from the group consisting of PE (polyethylene), LDPE (low density polyethylene), PP (polypropylene), OPP (oriented polypropylene), PET (polyethylene terephthalate), APET (amorphous PET), PET- G (glycol modified polyethyleneterephthalate), recycled PET (rPET) or CPET (crystalline PET). Those are typical substrates as used in the production of re-closable food packaging units. The pressure sensitive adhesive composition of the present invention not only showed good compatibility with these substrates but was also found to be easily formed into a film suitable to be processed in the manufacturing of packaging units, for example by extrusion or melt blowing.

The article is preferably one selected from the group consisting of packaging unit for foods, drugs, hygienic tissues, cleaning tissues or cosmetic tissues and/or packaging units to be heated in a microwave or oven.

The article comprising the pressure sensitive adhesive composition of the present invention may be manufactured according to methods known to the person skilled in the art. Accordingly, a further object of the present invention is a method for manufacturing an article according to the present invention, the method comprising the following steps:
i) forming a film of the pressure sensitive adhesive composition according to the invention through a blow film head and/or nozzle;
ii) bringing the formed film of step i) as middle layer in contact with two further layers.

The present invention will be explained in more detail with reference to the following examples, which by no means are to be understood as limiting the scope and spirit of the invention.

### Examples:

Following compounds were employed:
Koattro KT MR 06: Polybutene-1 polymer from Lyondell Basell
Oppanol N80: polyisobutylene Mn=8*10^5 g/mol from BASF
Oppanol N50: polyisobutylene Mn=5*10^5 g/mol from BASF
Regalite R1010: hydrogenated hydrocarbon resin from Eastman
Kraton 1200 HT: styrene-isoprene-styrene star shaped blockcopolymer
Escorez 2203 LC: tackifying resin from ExxonMobil
Escorez 5380: cycloaliphatic hydrocarbon resin from ExxonMobil,
Irganox 565: Stabilizer from BASF
Irganox B 225: Stabilizer from BASF

Several pressure sensitive adhesive compositions were prepared as summarized in Table 1 with the content given in wt.-% based on the total weight of the respective composition.

**Table 1**

| Component | Com.-Example 1 | Example 2 | Example 3 |
|---|---|---|---|
| Koattro KT MR 06 | | 60 | 63.7 |
| Koattro KT MR 05 | 40 | | |
| Oppanol N50 | | | 2.5 |
| Oppanol N80 | | 10 | |
| Regalite 1010 | 9.5 | | |
| Kraton 1200 HAT | 20 | | |
| Escorez 2203 LC | 30 | 14.6 | 14.8 |
| Escorez 5380 | | 14.7 | 18.4 |
| Irganox 565 | | 0.2 | 0.2 |
| Irganox B 225 | 0.5 | 0.5 | 0.5 |
| Add | 100 | 100 | 100 |

Example 1, which serves as a comparative example, contains a styrene block copolymer, while in Example 2 and Example 3 according to the invention no styrene block copolymers are used.

The compositions were analyzed with regard to their re-closable properties, viscosity and MFI according to the following test methods:
Viscosity: Rheometer TA DHR2; ASTM D 3236; 200°C

Test method for re-closable characteristics: The pressure sensitive adhesive was coated on PE with a coating knife (300 µm) and dried for 1 day at room temperature, followed by 1 hour at 90 °C. The dried layer (thickness of dried layer about 20 µm) was adhered on PE and a 25 mm thick strip was rolled up. The adhesion was measured right after production and again measured after 24 hours. Immediately after the measurement the strip was rolled up again (with a 2 kg roller) and the adhesion was measured again. This step was repeated three times. The adhesion was measured according to DIN EN ISO 11339:2010-06 (unit N/25mm; measurement 300 mm/Min). The re-closability given in Table 2 corresponds to the one measured after the fourth time.
Melt flow index: DIN EN ISO 1133-1:2012-03; 2.16 kg, 190 °C / 10 min
Results are given as - (bad); - (sufficient); 0 (acceptable); + (good); ++ (very good)

The results are summarized in Table 2:

| Composition | Example 1 | Example 2 | Example 3 |
|---|---|---|---|
| Viscosity (200 °C) | 300 Pa*s | 1700 Pa*s | 800 Pa*s |
| Re-closable characteristics | + | + | ++ |
| MFI | 20 | 8 | 10 |

As can be depicted from the data provided in Table 2, the pressure sensitive adhesive compositions showed excellent viscosity while at the same time having more than satisfying re-closable characteristics and MFI.

## Claims

1. Pressure sensitive adhesive composition comprising, based on the total weight of the composition:
from 30 to 80 wt.% of a) at least one butene-1 (co)polymer,
from 0.5 to 50 wt.% of b) at least one solid tackifier; and,
from 0.5 to 30 wt.% of c) at least one polyisobutylene polymer, wherein the at least one polyisobutylene polymer has a weight average molecular weight (Mw) of 40 000 to 1 110 000 g/mol, as measured via GPC using polystyrene standards.

2. Pressure sensitive adhesive composition according to claim 1, **characterized in that** said at least one butene-1 (co)polymer has a content of butene-1 derived units of 80 wt.% or more, preferably 90 to 99 wt.-%.

3. Pressure sensitive adhesive composition according to claim 1 or claim 2, **characterized in that**:
the at least one solid tackifier is selected from the group consisting of: hydrocarbon resin, preferably hydrogenated hydrocarbon resin; aromatic modified resins, terpen phenol resins, piperylene, 2-methyl-2-butene copolymers, cyclopentadien resins or mixtures thereof; and/or,
the at least one solid tackifier has a softening point, as measured according to ASTM E28-99 of 80 to 150 °C, preferably 85 to 130 °C, more preferably 90 to 115 °C.

4. Pressure sensitive adhesive composition according to any one of claims 1 to 3, **characterized in that** the content of styrene block copolymer in the composition is less than 5 wt.-%, preferably less than 1 wt.-%, more preferably less than 0.5 wt.-%, in particular less than 0.1 wt.-%, based on the total weight of the composition respectively, especially, the composition being free of styrene block copolymer.

5. The pressure sensitive adhesive composition according to any one of claims 1 to 4, **characterized in that** the composition has a melt flow index (MFI) of 2 to 30 g/10 min, preferably 2 to 25 g/10 min, more preferably 2 to 20 g/10 min, in particular 2 to 18 g/10 min, measured according to DIN EN ISO 1133-1:2012-03; 2.16 kg, 190 °C / 10 min.

6. Pressure sensitive adhesive composition according to any one of claims 1 to 5, **characterized in that** the composition comprises the at least one butene-1 (co)polymer in an amount of 35 to 75 wt.-%, based on the total weight of the composition.

7. Pressure sensitive adhesive composition according to any one of claims 1 to 6, **characterized in that** the composition comprises the at least one solid tackifier in an amount of 5 to 40 wt.-%, preferably 10 to 40 wt.-%, based on the total weight of the composition.

8. Pressure sensitive adhesive composition according to any one of claims 1 to 7, **characterized in that** the composition comprises the at least one polyisobutylene polymer in an amount of 0.5 to 15 wt.-%, preferably 1 to 15 wt.-%, especially 1 to 7.5 wt.-%, based on the total weight of the composition.

9. Pressure sensitive adhesive composition according to any one of claims 1 to 8, **characterized in that** the at least one polyisobutylene has a Mw/Mn of lower than 5, as measured via GPC using polystyrene standards.

10. Pressure sensitive adhesive composition according to any one of claims 1 to 9, **characterized in that** the composition comprises at least one further polymer different from a) and c), the further polymer preferably comprising an olefin (co)polymer, preferably an alpha-olefin (co)polymer; more preferably a metallocene catalyzed alpha-olefin (co)polymers, even more preferably an ethylene or octene alpha-olefin (co)polymer; most preferably an octene ethylene alpha-olefin copolymer.

11. Use of a pressure sensitive adhesive composition according to any one of claims 1 to 10 as closing means for a re-closable packaging unit, preferably a packaging unit for foods, drugs, hygienic tissues, cleaning tissues or cosmetic tissues and/or for packaging units to be heated in a microwave or oven.

12. Article comprising a pressure sensitive adhesive composition according to any one of claims 1 to 10 as an adhesive layer between two substrates.

13. Article according to claim 12, **characterized in that** at least one of the substrates contains or is made of a material selected from the group consisting of PE (polyethylene), LDPE (low density polyethylene), PP (polypropylene), OPP (oriented polypropylene), PET (polyethylene terephthalate), APET (amorphous PET), PET-G (glycol modified polyethyleneterephthalate), rPET (recycled PET) or CPET (crystalline PET).

14. Article according to claim 12 or claim 13, **characterized in that** the article is one selected from the group consisting of: packaging unit for foods, drugs, hygienic tissues, cleaning tissues or cosmetic tissues; and, packaging units to be heated in a microwave or oven.

15. A method for manufacturing an article according to any one of claims 12 to 14 comprising the following steps:
i) forming a film of the pressure sensitive adhesive composition according to any one of claims 1 to 10 through a blow film head and/or nozzle; and,
ii) bringing the formed film of step i) as middle layer in contact with two further layers.

## Patentansprüche

1. Druckempfindliche Klebstoffzusammensetzung, umfassend, basierend auf dem Gesamtgewicht der Zusammensetzung:
von zu 30 bis 80 Gew.-% a) mindestens einen Buten-1-(Co)polymer,
von zu 0,5 bis 50 Gew.-% b) mindestens einen festen Klebrigmacher; und
von zu 0,5 bis 30 Gew.-% c) mindestens ein Polyisobutylenpolymer, wobei das mindestens eine Polyisobutylenpolymer ein Gewichtsmittel des Molekulargewichts (Mw) von 40.000 bis 1.110.000 g/mol aufweist, gemessen mittels GPC unter Verwendung von Polystyrolstandards.

2. Druckempfindliche Klebstoffzusammensetzung nach Anspruch 1, **dadurch gekennzeichnet, dass** das mindestens eine Buten-1-(Co)polymer einen Gehalt an von Buten-1 abgeleiteten Einheiten von 80 Gew.-% oder mehr, vorzugsweise 90 bis 99 Gew.-%, aufweist.

3. Druckempfindliche Klebstoffzusammensetzung nach Anspruch 1 oder Anspruch 2, **dadurch gekennzeichnet, dass:**
der mindestens eine feste Klebrigmacher ausgewählt ist aus der Gruppe bestehend aus: Kohlenwasserstoffharz, vorzugsweise hydriertes Kohlenwasserstoffharz; aromatisch modifizierten Harzen, Terpenphenolharzen, Piperylen, 2-Methyl-2-buten-Copolymeren, Cyclopentadienharzen oder Gemischen davon; und/oder
der mindestens eine feste Klebrigmacher einen Erweichungspunkt, wie gemäß ASTM E28-99 gemessen, von 80 bis 150 °C, vorzugsweise 85 bis 130 °C, stärker bevorzugt von 90 bis 115 °C aufweist.

4. Druckempfindliche Klebstoffzusammensetzung nach einem der Ansprüche 1 bis 3, **dadurch gekennzeichnet, dass** der Gehalt an Styrolblockcopolymer in der Zusammensetzung weniger als 5 Gew.-%, vorzugsweise weniger als 1 Gew.-%, stärker bevorzugt weniger als 0,5 Gew.-%, insbesondere weniger als 0,1 Gew.-%, jeweils bezogen auf das Gesamtgewicht der Zusammensetzung, beträgt, wobei die Zusammensetzung speziell frei von Styrolblockcopolymer ist.

5. Druckempfindliche Klebstoffzusammensetzung nach einem der Ansprüche 1 bis 4, **dadurch gekennzeichnet, dass** die Zusammensetzung einen Schmelzindex (MFI) von 2 bis 30 g/10 min, vorzugsweise 2 bis 25 g/10 min, stärker bevorzugt 2 bis 20 g/10 min, insbesondere 2 bis 18 g/10 min aufweist, gemessen gemäß DIN EN ISO 1133-1:2012-03; 2,16 kg, 190 °C/10 min.

6. Druckempfindliche Klebstoffzusammensetzung nach einem der Ansprüche 1 bis 5, **dadurch gekennzeichnet, dass** die Zusammensetzung das mindestens eine Buten-1-(Co)polymer in einer Menge von 35 bis 75 Gew.-%, basierend auf dem Gesamtgewicht der Zusammensetzung, umfasst.

7. Druckempfindliche Klebstoffzusammensetzung nach einem der Ansprüche 1 bis 6, **dadurch gekennzeichnet, dass** die Zusammensetzung den mindestens einen festen Klebrigmacher in einer Menge von 5 bis 40 Gew.-%, vorzugsweise 10 bis 40 Gew.-%, basierend auf dem Gesamtgewicht der Zusammensetzung, umfasst.

8. Druckempfindliche Klebstoffzusammensetzung nach einem der Ansprüche 1 bis 7, **dadurch gekennzeichnet, dass** die Zusammensetzung das mindestens eine Polyisobutylenpolymer in einer Menge von 0,5 bis 15 Gew.-%, vorzugsweise 1 bis 15 Gew.-%, insbesondere 1 bis 7,5 Gew.-%, basierend auf dem Gesamtgewicht der Zusammensetzung, umfasst.

9. Druckempfindliche Klebstoffzusammensetzung nach einem der Ansprüche 1 bis 8, **dadurch gekennzeichnet, dass** das mindestens eine Polyisobutylen ein Mw/Mn von weniger als 5 aufweist, gemessen mittels GPC unter Verwendung von Polystyrolstandards.

10. Druckempfindliche Klebstoffzusammensetzung nach einem der Ansprüche 1 bis 9, **dadurch gekennzeichnet, dass** die Zusammensetzung mindestens ein weiteres, von a) und c) verschiedenes Polymer umfasst, wobei das weitere Polymer vorzugsweise ein Olefin-(Co)polymer, vorzugsweise ein α-Olefin-(Co)polymer, umfasst; stärker bevorzugt ein metallocenkatalysiertes α-Olefin-(Co)polymer, noch stärker bevorzugt ein Ethylen- oder Octen-α-Olefin-(Co)polymer; am stärksten bevorzugt ein Octen-Ethylen-α-Olefin-Copolymer.

11. Verwendung einer druckempfindlichen Klebstoffzusammensetzung nach einem der Ansprüche 1 bis 10 als Verschlussmittel für eine wiederverschließbare Verpackungseinheit, vorzugsweise eine Verpackungseinheit für Lebensmittel, Arzneimittel, Hygienetücher, Reinigungstücher oder Kosmetiktücher und/oder für Verpackungseinheiten, die in einer Mikrowelle oder einem Ofen zu erhitzen sind.

12. Erzeugnis, umfassend eine druckempfindliche Klebstoffzusammensetzung nach einem der Ansprüche 1 bis 10 als eine Klebstoffschicht zwischen zwei Substraten.

13. Erzeugnis nach Anspruch 12, **dadurch gekennzeichnet, dass** mindestens eines der Substrate ein Material enthält oder aus einem Material hergestellt ist, ausgewählt aus der Gruppe zusammengesetzt aus PE (Polyethylen), LDPE (Polyethylen geringer Dichte), PP (Polypropylen), OPP (orientiertes Polypropylen), PET (Polyethylenterephthalat), APET (amorphes PET), PET-G (glykolmodifiziertes Polyethylenterephthalat), rPET (recyceltes PET) oder CPET (kristallines PET).

14. Erzeugnis nach Anspruch 12 oder Anspruch 13,
**dadurch gekennzeichnet, dass** das Erzeugnis eines ist, ausgewählt aus der Gruppe bestehend aus: Verpackungseinheit für Lebensmittel, Arzneimittel, Hygienetücher, Reinigungstücher oder Kosmetiktücher; und Verpackungseinheiten, die in einer Mikrowelle oder einem Ofen zu erhitzen sind.

15. Verfahren zum Herstellen eines Erzeugnisses nach einem der Ansprüche 12 bis 14, umfassend die folgenden Schritte:
i) Ausbilden einer Folie der druckempfindlichen Klebstoffzusammensetzung nach einem der Ansprüche 1 bis 10 durch einen Blasfolienkopf und/oder eine Düse; und
ii) Inberührungbringen der ausgebildeten Folie aus Schritt i) als mittlere Schicht mit zwei weiteren Schichten.

## Revendications

1. Composition adhésive sensible à la pression comprenant, sur la base du poids total de la composition :
de 30 à 80 % en poids a) d'au moins un (co)polymère de butène-1,
de 0,5 à 50 % en poids b) d'au moins un agent collant solide ; et,
de 0,5 à 30 % en poids de c) au moins un polymère de polyisobutylène, dans lequel l'au moins un polymère de polyisobutylène a un poids moléculaire moyen en poids (Mw) de 40 000 à 1 110 000 g/mol, tel que mesuré par GPC à l'aide d'étalons de polystyrène.

2. Composition adhésive sensible à la pression selon la revendication 1, **caractérisée en ce que** ledit au moins un (co)polymère de butène-1 a une teneur en motifs dérivés du butène-1 de 80 % en poids ou plus, de préférence de 90 à 99 % en poids.

3. Composition adhésive sensible à la pression selon la revendication 1 ou la revendication 2, **caractérisée en ce que** :
l'au moins un agent collant solide est choisi dans le groupe constitué par : une résine hydrocarbonée, de préférence une résine hydrocarbonée hydrogénée ; résines aromatiques modifiées, résines terpène phénol, pipérylène, copolymères de 2-méthyl-2-butène, résines de cyclopentadiène ou leurs mélanges ; et/ou,
l'au moins un agent collant solide a un point de ramollissement, tel que mesuré selon ASTM E28-99, de 80 à 150 °C, de préférence de 85 à 130 °C, plus préférentiellement de 90 à 115 °C.

4. Composition adhésive sensible à la pression selon l'une quelconque des revendications 1 à 3, **caractérisée en ce que** la teneur en copolymère séquencé de styrène dans la composition est inférieure à 5 % en poids, de préférence inférieure à 1 % en poids, plus préférentiellement inférieure à 0,5 % en poids, en particulier inférieure à 0,1 % en poids, par rapport au poids total de la composition respectivement, en particulier, la composition étant exempte de copolymère séquencé de styrène.

5. Composition adhésive sensible à la pression selon l'une quelconque des revendications 1 à 4, **caractérisée en ce que** la composition présente un indice de fluidité à chaud (MFI) de 2 à 30 g/10 min, de préférence de 2 à 25 g/10 min, plus préférablement de 2 à 20 g/10 min, en particulier de 2 à 18 g/10 min, mesuré selon DIN EN ISO 1133-1:2012-03 ; 2,16 kg, 190 °C / 10 min.

6. Composition adhésive sensible à la pression selon l'une quelconque des revendications 1 à 5, **caractérisée en ce que** la composition comprend l'au moins un (co)polymère de butène-1 en une quantité de 35 à 75 % en poids, par rapport au poids total de la composition.

7. Composition adhésive sensible à la pression selon l'une quelconque des revendications 1 à 6, **caractérisée en ce que** la composition comprend l'au moins un agent collant solide en une quantité de 5 à 40 % en poids, de préférence de 10 à 40 % en poids, par rapport au poids total de la composition.

8. Composition adhésive sensible à la pression selon l'une quelconque des revendications 1 à 7, **caractérisée en ce que** la composition comprend l'au moins un polymère de polyisobutylène en une quantité de 0,5 à 15 % en poids, de préférence de 1 à 15 % en poids, en particulier de 1 à 7,5 % en poids, par rapport au poids total de la composition.

9. Composition adhésive sensible à la pression selon l'une quelconque des revendications 1 à 8, **caractérisée en ce que** l'au moins un polyisobutylène a un Mw/Mn inférieur à 5, tel que mesuré par GPC à l'aide d'étalons de polystyrène.

10. Composition adhésive sensible à la pression selon l'une quelconque des revendications 1 à 9, **caractérisée en ce que** la composition comprend au moins un autre polymère différent de a) et c), l'autre polymère comprenant de préférence un (co)polymère d'oléfine, de préférence un (co)polymère d'alpha-oléfine ; plus préférablement des (co)polymères d'alpha-oléfine catalysés par un métallocène, encore plus préférablement un (co)polymère d'alpha-oléfine d'éthylène ou d'octène ; le plus préférablement un copolymère d'alpha-oléfine d'éthylène et octène.

11. Utilisation d'une composition adhésive sensible à la pression selon l'une quelconque des revendications 1 à 10 comme moyen de fermeture pour une unité d'emballage refermable, de préférence une unité d'emballage pour aliments, médicaments, lingettes hygiéniques, lingettes de nettoyage ou lingettes cosmétiques et/ou pour des unités d'emballage destinées à être chauffées dans un four à micro-ondes ou un four.

12. Article comprenant une composition adhésive sensible à la pression selon l'une quelconque des revendications 1 à 10 en tant que couche adhésive entre deux substrats.

13. Article selon la revendication 12, **caractérisé en ce qu'**au moins l'un des substrats contient ou est constitué d'un matériau choisi dans le groupe constitué de PE (polyéthylène), LDPE (polyéthylène basse densité), PP (polypropylène), OPP (polypropylène bi-orienté), PET (téréphtalate de polyéthylène), APET (PET amorphe), PET-G (polyéthylène téréphtalate modifié au glycol), rPET (PET recyclé) ou CPET (PET cristallin).

14. Article selon la revendication 12 ou la revendication 13,
**caractérisé en ce que** l'article est l'un choisi dans le groupe constitué par : une unité d'emballage pour aliments, médicaments, lingettes hygiéniques, lingettes de nettoyage ou lingettes cosmétiques ; et, des unités d'emballage destinées à être chauffées dans un four à micro-ondes ou un four.

15. Procédé de fabrication d'un article selon l'une quelconque des revendications 12 à 14, comprenant les étapes suivantes :
i) la formation d'un film de la composition adhésive sensible à la pression selon l'une quelconque des revendications 1 à 10 au moyen d'une tête de film de soufflage et/ou d'une buse ; et,
ii) la mise en contact du film formé à l'étape i) en tant que couche intermédiaire en contact avec deux autres couches.
